# DEMANDE DE BREVET EUROPEEN

(11) **EP 4 617 060 A2**
(43) Date de publication de la demande: **17.09.2025**
(21) Numéro de dépôt: 25184235.7
(22) Date de dépôt: 20.11.2018
(51) Int. Cl.: B32B 37/00

(54) **STRUCTURE MULTICOUCHE POUR LA RÉALISATION D'UN REVÊTEMENT DE SOL**

(30) Priorité: 28.12.2017 FR 1763346
(62) Demande divisionnaire de: 23151553.7
(71) Demandeur: GERFLOR, 69009 Lyon 9ème (FR)
(72) Inventeur: DUMANT, Nicolas, 84600 VALREAS (FR)
(74) Mandataire: Ipsilon Lyon

(57) **Abrégé**

L'invention concerne une structure multicouche pour la réalisation d'un revêtement de sol comprenant une couche supérieure d'usure liée à une couche d'envers en polymère, ladite couche d'envers comprenant successivement une première couche renforcée avec une première armature de renfort et une seconde couche renforcée avec une seconde armature de renfort, la première armature de renfort est située dans les premiers 40% de l'épaisseur de la couche d'envers à partir de la face supérieure de ladite couche d'envers et la seconde armature de renfort est située dans la moitié inférieure de l'épaisseur de la couche d'envers.

## Description

### DOMAINE TECHNIQUE

La présente invention concerne une structure multicouche et son procédé de fabrication, pour la réalisation d'un revêtement de sol dont la pose est facilitée.

### ART ANTERIEUR

Il est connu de l'état de la technique une structure multicouche pour la réalisation d'un revêtement de sol comprenant une couche supérieure d'usure composée au moins de polychlorure de vinyle (PVC), une couche décor imprimée et une couche d'envers, moussée ou compacte, réalisée par exemple à partir de PVC. Ces revêtements de sols se présentent généralement sous forme de rouleau ou bien sous forme de dalle ou lame souple, enroulable. Ces revêtements de sols peuvent notamment être réalisés par un procédé d'enduction de plastisol PVC.

La pose de ce type de revêtement de sol consiste généralement à appliquer une colle liquide acrylique sur le support à recouvrir puis à dérouler et positionner le revêtement de sol sur la colle de manière à le fixer de façon permanente. Cette étape est fastidieuse et complexifie d'autant les rénovations futures des mêmes supports, le seul moyen de déposer le revêtement de sol étant de l'arracher du support.

Afin de faciliter la pose et d'améliorer la stabilité dimensionnelle de ce type de revêtement de sol, il est connu que la couche d'envers de ces structures multicouche comprenne un voile de verre enduit d'un plastisol PVC gélifié sur ses deux faces et disposé au contact de la couche d'usure. La face de la couche d'envers au contact de la couche d'usure est imprimée par héliogravure afin de présenter une couche décor.

Une autre solution consiste à proposer des revêtements de sol dit « plombants », pouvant se poser sans colle. Ces revêtements de sol comprennent notamment une couche d'envers dont le poids est augmenté afin de limiter la formation de fronces ou de plis lorsque le revêtement est posé. Cependant, les solutions actuelles ne sont pas satisfaisantes car elles nécessitent toujours l'emploi de colles poissantes. D'autre part l'alourdissement du revêtement de sol détériore sa facilité de manipulation par le poseur.

Une solution de revêtement de sol en pose libre, c'est-à-dire sans colle permanente, consiste à rigidifier le revêtement de sol en intercalant une seconde armature de renfort tel qu'un second voile de verre au contact de la couche formé par un voile de verre enduit d'un plastisol PVC gélifié sur ses deux faces. Cette solution apporte cependant trop de rigidité au revêtement de sol obtenu et complexifie l'opération de pose.

### EXPOSE DE L'INVENTION

L'un des buts de l'invention est donc de proposer une structure multicouche pour la réalisation d'un revêtement de sol dont la manipulation et la pose sont facilitées.

Un autre but de l'invention est de proposer une structure multicouche pour la réalisation d'un revêtement de sol présentant un effet plombant et dont la pose peut se faire sans colle, notamment pour des zones de trafic léger ou moyen selon le classement U.P.E.C U2S et U3 voire U4.

Un autre but de l'invention est de proposer une structure multicouche pour la réalisation d'un revêtement de sol conservant des propriétés d'isolation acoustique selon l'EN ISO 10140-3 d'atténuation acoustique et de sonorité à la marche selon NF EN 16205.

Un autre but de l'invention est de proposer un procédé de fabrication de la structure multicouche.

A cet effet, il est proposé une structure multicouche pour la réalisation d'un revêtement de sol comprenant une couche supérieure d'usure liée à une couche d'envers en polymère, ladite couche d'envers comprenant successivement une première couche renforcée avec une première armature de renfort et une seconde couche renforcée avec une seconde armature de renfort, la première armature de renfort est située dans les premiers 40% de l'épaisseur de la couche d'envers à partir de la face supérieure de ladite couche d'envers et la seconde armature de renfort est située dans la moitié inférieure de l'épaisseur de la couche d'envers.

La face supérieure de la couche d'envers est la face en contact avec la couche d'usure, la face inférieure de la couche d'envers est la face destinée à être en contact avec le sol. Par dans les premiers 40% de l'épaisseur de la couche d'envers à partir de la face supérieure de ladite couche d'envers on entend également dans les 40% supérieurs de l'épaisseur de la couche d'envers.

De par le positionnement des première et seconde armatures de renfort dans l'épaisseur de la couche d'envers, la structure multicouche présente un effet « bi-lame ». Par effet bi-lame on entend que l'enroulement de la structure multicouche sur elle-même est plus facile dans un sens que dans un autre. En l'occurrence, l'enroulement du revêtement de sol la face supérieure de la couche d'usure vers l'extérieur du rouleau formé est plus simple que l'enroulement du revêtement la face supérieure de la couche d'usure vers l'intérieur du rouleau formé. Durant son stockage et son transport, le revêtement peut donc être enroulé la face supérieure de la couche d'usure vers l'extérieur du rouleau. La pose du revêtement de sol est facilitée car celui-ci se déroule naturellement et se plaque lorsqu'il est posé sur le sol à la manière d'un revêtement plombant. L'apparition de plis est également limitée car les armatures de renfort ne présentent aucune tension lorsque le revêtement est posé sur une surface plane et améliorent la stabilité dimensionnelle du produit.

Le revêtement de sol obtenu peut se présenter sous forme de rouleaux, de dalles, ou de lames enroulables sur un mandrin, facilement transportables.

De cette manière, le revêtement de sol peut être posé sans colle dans des zones de faible trafic selon le classement U.P.E.C. Dans des zones de trafic plus important, notamment moyen, un ruban adhésif double face peut être disposé entre les bords des rouleaux, dalles ou lames et le sol. L'opération de pose est ainsi grandement facilitée ainsi que la dépose du revêtement en cas de rénovation.

Cet effet bi-lame est d'autant plus accentué que la première armature de renfort est éloignée de la seconde armature de renfort. De façon préférentielle, la première armature de renfort est située dans les premiers 30% de l'épaisseur de la couche d'envers à partir de la face supérieure de ladite couche d'envers.

Alternativement et de façon indépendante, la seconde armature de renfort est située dans les derniers 35% de l'épaisseur de la couche d'envers.

De façon plus préférentielle et afin d'accentuer l'effet bi-lame du revêtement de sol en éloignant les deux armatures de renfort, la première armature de renfort est située dans les premiers 30% de l'épaisseur de la couche d'envers à partir de la face supérieure de ladite couche d'envers, et la seconde armature de renfort est située dans les derniers 35% de l'épaisseur de la couche d'envers.

La couche d'usure est par exemple réalisée en polychlorure de vinyle et présente, de préférence, une épaisseur comprise entre 0,1 et 1 mm, préférentiellement entre 0,20 et 0,70 mm. L'épaisseur de la couche d'usure est préférentiellement inférieure à l'épaisseur de la couche d'envers afin de ne pas diminuer l'effet bi-lame créé par la couche d'envers. La couche d'usure peut être vernie afin d'améliorer la résistance à la tâche et à la rayure.

La couche d'envers est par exemple réalisée en polychlorure de vinyle, mousse ou compact, et présente de préférence une épaisseur comprise entre 0,6 et 6 mm, préférentiellement entre 1 et 3 mm. Une couche d'envers moussée apporte de la souplesse à la structure multicouche et facilite son enroulement la couche d'usure vers l'extérieur du rouleau formé.

La première couche renforcée présente de préférence une épaisseur comprise entre 0,3 et 5,7 mm, plus préférentiellement entre 0,4 et 1,5 mm. La première couche renforcée est compacte ou moussé et peut notamment être une couche de plastisol gélifiée. La première couche renforcée est de préférence compacte afin de stabiliser le revêtement de sol.

La seconde couche renforcée présente de préférence une épaisseur comprise entre 0,3 et 5,7 mm, préférentiellement entre 1 et 2 mm. La seconde couche renforcée est compacte ou moussé et peut notamment être une couche de plastisol gélifiée.

La seconde couche renforcée est de préférence moussée. Une seconde couche renforcée moussée apporte de la souplesse à la structure multicouche et facilite son enroulement la couche d'usure vers l'extérieur du rouleau formé, la mousse étant alors compressée par la flexion du revêtement. A l'état de repos, la mousse reprend sa forme, favorisant ainsi le déroulement du revêtement et facilitant sa pose. Avantageusement, la seconde couche renforcée est une couche de plastisol gélifiée, de préférence moussée.

Selon l'invention, la couche d'usure peut être transparente à la lumière visible de manière à ce qu'un décor imprimé en envers de la couche d'usure, en surface de la couche d'envers ou encore sur un film imprimé disposé entre la couche d'usure et la couche d'envers puisse être visible au travers de la couche d'usure.

Selon l'invention, la couche d'usure peut également être une couche décor obtenue par pressage ou calandrage de granulés de polymère teintés ou par enduction et gélification d'un plastisol teinté.

Une armature de renfort peut par exemple être une grille de renfort ou une couche de textile non-tissé tel qu'un voile de verre ou de polyester. Des matériaux sous forme de fibres pouvant être utilisés pour l'obtention d'une armature de renfort sont notamment le Polyéthylène, Polyéthylène Téréphtalate (PET), les fibres de verre, de polyester, l'aramide, les fibres de carbone, les fibres de nitrile, l'éthylène vinyle acétate (EVA), le Polyéthylène haute densité (PEHD), le Polyéthylène basse densité (PEBD), le polychlorure de vinyle (PVC).

Avantageusement, la première armature de renfort est une couche de textile non-tissé, préférentiellement une voile de fibres de verre ou de polyester.

Avantageusement, la seconde armature de renfort est une grille de renfort, préférentiellement une grille de fibres de verre ou de polyester.

La seconde armature de renfort, lorsqu'elle est une grille de renfort permet d'obtenir une bonne imprégnation de cette armature dans la couche d'envers et de calibrer l'expansion de la couche d'envers lorsque celle-ci est une mousse obtenue par un procédé d'enduction. Dans les procédés par enduction actuels, les couches d'envers moussée présentent sur une même campagne de fabrication ou entre deux campagnes, des épaisseurs très variables, l'expansion étant un phénomène difficile à contrôler. Ceci oblige les fabricants de revêtements de sol à trier les revêtements et à les classer par lots d'épaisseurs afin d'être sûr de vendre des lots compatibles entre eux et d'éviter le désaffleure entre deux rouleaux de revêtement de sol une fois posés.

Une manière selon l'invention de calibrer l'expansion d'une couche d'envers moussée et/ou d'une seconde couche renforcée moussée consiste à déposer une couche de plastisol liquide puis à déposer sur cette couche avant sa gélification, éventuellement après une étape de pré-gélification, une grille de renfort. La couche moussée ainsi obtenue présente alors une épaisseur constante, la grille homogénéisant la vitesse d'expansion de la mousse lors du passage dans un four. D'autre part, selon l'épaisseur de plastisol déposée et/ou le niveau de pré-gélification de le couche de plastisol au moment de la dépose de la grille de renfort, il peut être obtenu sur la face inférieure de la couche d'envers des plots favorisant l'adhérence de la structure multicouche au support et limitant les risques de glissement lorsque celui-ci est posé sans colle. Cette solution permet également de simplifier les procédés actuels de fabrication de produits présentant une couche d'envers moussée réalisée par enduction.

La couche d'envers peut éventuellement comprendre une couche intercalaire compacte disposée entre la première couche renforcée et la seconde couche renforcée.

L'invention concerne également un procédé de fabrication d'une telle structure multicouche, remarquable en ce qu'il comprend les étapes suivantes qui consistent à :
a) former une première couche renforcée avec une première armature de renfort ;
b) enduire une couche de plastisol liquide comprenant un agent d'expansion sur une face de la première couche renforcée ;
c) disposer sur ladite couche de plastisol liquide la seconde armature de renfort ;
d) gélifier ladite couche de plastisol de manière à former une seconde couche renforcée ;
e) enduire puis gélifier, ou à complexer une couche d'usure sur l'autre face de la première couche renforcée ;

De façon préférentielle, l'étape a) du procédé selon l'invention consiste à :
- enduire une couche de plastisol liquide sur la première armature de renfort ;
- gélifier ladite couche de plastisol de manière à obtenir la première couche renforcée ;

### DESCRIPTION SOMMAIRE DES FIGURES

D'autres avantages et caractéristiques ressortiront mieux de la description qui va suivre, donnée à titre d'exemple non limitatif, de la structure multicouche selon l'invention, à partir des dessins annexés dans lesquels :
- la figure 1 est une représentation schématique et en coupe transversale d'un premier exemple de réalisation de la structure multicouche selon l'invention ;
- la figure 2 est une représentation schématique similaire à la figure 1 d'un second exemple de réalisation de la structure multicouche selon l'invention ;
- la figure 3 est une représentation schématique similaire à la figure 1 d'un troisième exemple de réalisation de la structure multicouche selon l'invention ;

### DESCRIPTION DETAILLEE DE L'INVENTION

L'invention concerne une structure multicouche (1) pour la réalisation d'un revêtement de sol sont la manipulation et la pose sont facilitées.

La structure multicouche (1) selon l'invention peut présenter toute forme, notamment en panneau ou dalle souples, enroulables sur elle-même ou sur un mandrin, et de préférence en rouleau.

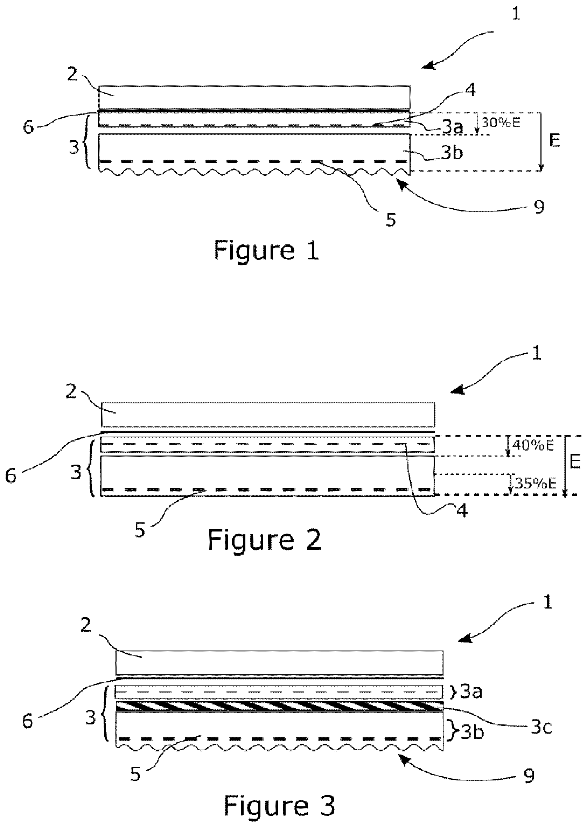

En référence aux figures 1 à 3, la structure multicouche (1) comprend une couche supérieure d'usure (2) dont les fonctions principales sont la maîtrise de la glissance, la résistance à l'usure, la facilité de nettoyage, et une couche d'envers (3) en polymère. Sur les figures 1 et 2, E désigne l'épaisseur de la couche d'envers (3).

La couche d'usure (2), par exemple réalisée en polychlorure de vinyle, présente une épaisseur comprise entre 0,1 et 1 mm, préférentiellement entre 0,20 et 0,70 mm.

La couche d'usure (2) peut être constituée par une couche enduite, une couche calandrée ou extrudée. La couche d'usure (2) peut en outre assurer la fonction de couche décor, notamment si elle est obtenue à partir d'un plastisol teinté ou par pressage de granulés teintés ou encore par calandrage. De façon générale la couche d'usure (2) est transparente ou translucide de manière à ce qu'une couche décor (6) soit visible au travers de la couche d'usure (2). La couche décor (6) peut notamment être imprimée sur la face de la couche d'envers (3) au regard de la couche d'usure (2) ou alternativement sur la face de la couche d'usure (2) au regard de la couche d'envers (3).

De façon alternative, la couche décor peut consister en un film polymère tel qu'un film PVC imprimée par toute technique connue.

La couche d'envers (3), par exemple réalisée en en polychlorure de vinyle, présente une épaisseur comprise entre 0,6 et 6 mm, préférentiellement entre 1 et 3 mm. La couche d'envers (3) comprend successivement une première couche renforcée (3a) d'une première armature de renfort (4) et une seconde couche renforcée (3b) d'une seconde armature de renfort (5). Les couches renforcées (3a, 3b) peuvent être compacte, ou moussée. Une couche renforcée (3a, 3b) en mousse permet d'améliorer l'isolation acoustique selon l'EN ISO 10140-3 et la sonorité à la marche selon NF EN 16205 du revêtement de sol. La position des première et seconde armatures de renfort (4, 5) est indiquée par la médiane de leur épaisseur propre.

De façon préférentielle, la couche d'usure présente une épaisseur comprise entre 0,10 et 1 mm, et la couche d'envers présente une épaisseur comprise entre 0,6 et 6 mm afin d'obtenir un bon effet bi-lame.

Une couche renforcée (3a, 3b) peut être obtenue par tout procédé bien connu de l'homme du métier, notamment en formant une couche par calandrage, par pressage, par extrusion ou encore par enduction puis gélification d'un Plastisol et en laminant cette couche avec une armature de renfort. Une couche renforcée peut également être obtenue à partir d'un procédé d'enduction d'un plastisol sur une armature de renfort. De façon générale et d'une manière bien connue de l'homme du métier, une couche renforcée peut être obtenue à partir d'une composition comprenant un polymère, par exemple du PVC, un plastifiant, des charges et éventuellement des stabilisants, lubrifiants, additifs et pigments et une armature de renfort. Alternativement, le polymère peut être remplacé totalement ou partiellement par du caoutchouc, naturel ou synthétique, du linoléum ou encore du polyester.

Une couche renforcée (3a, 3b) est, lorsqu'il s'agit d'une couche de mousse, réalisée, par exemple, à partir de Plastisol de polychlorure de vinyle expansé et présente une densité comprise entre 0,20 et 0,50, et préférentiellement comprise entre 0,30 et 0,40.

Une couche renforcée (3a, 3b) se présente par exemple, lorsqu'il s'agit d'une couche compacte, sous la forme d'une couche de Plastisol gélifiée non moussée.

Une armature de renfort peut être une grille de renfort ou une couche de textile non-tissé tel qu'un voile de renfort en fibres de verre ou de polyester. Des matériaux sous forme de fibres pouvant être utilisés pour l'obtention d'une armature de renfort sont notamment le Polyéthylène, Polyéthylène Téréphtalate (PET), les fibres de verre, les fibres de polyester, l'aramide, les fibres de carbone, les fibres de nitrile, l'éthylène vinyle acétate (EVA), le Polyéthylène haute densité (PEHD), le Polyéthylène basse densité (PEBD), le polychlorure de vinyle (PVC).

Un voile de renfort peut par exemple consister en des fibres de verre de 10µm de diamètre environ et de 10mm de longueur réparties aléatoirement et liées entre elles par un alcool polyvinylique modifié. Un voile de renfort présente généralement une épaisseur comprise entre 0,3 et 1 mm et une masse surfacique comprise entre 30 g/m² et 100 g/m². La résistance à la traction d'un voile de renfort est généralement choisie pour être comprise entre 100 et 400 N/50mm dans les sens long et travers, mesurée selon la méthode ISO 1924/2.

Selon l'invention, la première armature de renfort (4) est préférentiellement un voile de renfort tel qu'un voile de fibre de verre.

Selon l'invention, la seconde armature de renfort (5) est préférentiellement une grille de renfort tel qu'une grille de fibres de verre. Les fils textiles d'une grille de renfort selon l'invention sont par exemple obtenus à partir de fibres de verre, et sont de préférence espacés les uns des autres d'entre 1 et 5 mm, préférentiellement d'entre 2 et 4 mm, selon les dimensions longitudinale et transversale, et présentent une masse linéique comprise entre 20 g/m et 110 g/m, avantageusement entre 35 g/m et 70 g/m. Une grille de renfort présente généralement une épaisseur comprise entre 0,1 et 1 mm et une masse surfacique comprise entre 30 et 150 g/m², préférentiellement entre 45 et 110 g/m².

La résistance à la traction d'une grille de renfort selon l'invention est avantageusement comprise entre 400 N/50mm et 1000 N/50mm dans les sens long et travers.

A titre d'exemple non limitatif, et selon la première forme de réalisation illustrée à la figure 1, la structure multicouche (1) comprend successivement une couche d'usure transparente (2) en PVC enduit présentant une épaisseur de 0,50 mm obtenue par enduction d'un plastisol, une couche d'envers (3) présentant une épaisseur de 2,09 mm comprenant une première couche renforcée (3a) présentant une épaisseur de 0,62 mm et une seconde couche renforcée (3b) présentant une épaisseur de 1,47 mm. La première couche renforcée (3a) est obtenue par enduction d'un plastisol de PVC sur une voile de fibre de verre (4) de 54g/ m² d'une épaisseur de 0,50mm. La couche ainsi obtenue est ensuite imprimée sur la face destinée à être au regard de la couche d'usure (2) de manière à obtenir une couche décor (6).

La seconde couche renforcée (3b) est obtenue par enduction d'une couche de plastisol de PVC comprenant un agent d'expansion sur l'envers de première couche renforcée (3a). Une grille de renfort (5) dont les fils d'une masse linéique de 50g/ m² sont espacés les uns des autres de 3 mm est déposée sur la couche de plastisol à l'état liquide et avant la gélification complète de la seconde couche renforcée (3b). Lors de l'étape de gélification et d'expansion dans un four à 160°C, la couche de plastisol circule à travers les mailles de la grille de renfort (5) et celle-ci prend alors position dans l'épaisseur de la couche (3b). D'autre part, la présence de la grille de renfort (5) homogénéise la vitesse d'expansion de la mousse.

Le voile de fibre de verre (4) est situé dans les premiers 30% de l'épaisseur de la couche d'envers à partir de la face supérieure de ladite couche d'envers. De façon plus précise, la médiane de l'épaisseur du voile de fibre de verre (4) est située à 14,8% de l'épaisseur de la couche d'envers (3) à partir de la face supérieure de ladite couche d'envers.

La grille de verre (5) est située dans la moitié inférieure de l'épaisseur. De façon plus précise, la grille de verre (5) est située à 69,9% de l'épaisseur de la couche d'envers à partir de la face supérieure de ladite couche d'envers. Le revêtement de sol ainsi obtenu présente une bonne main et un effet « bi-lame » moyen lui permettant de se dérouler de façon aisée et d'être manipulé et posé facilement à la manière d'un sol plombant.

La position de la grille de verre (5) est particulièrement avantageuse car elle favorise l'apparition lors de l'expansion de la mousse de plots (9) sur la face inférieure de la couche d'envers (3). Ces plots sont formés par l'expansion de la mousse entre les mailles de la grille (5) et forment des protubérances favorisant la résistance au cisaillement du revêtement de sol une fois posé sur un support à recouvrir. Ces plots (9) favorisent ainsi la pose libre du revêtement dans des zones de faible trafic voire la pose à l'aide d'adhésif double face dans les zones de trafic moyen ou fort. Ces plots s'étendent sur une hauteur d'environ 0,5mm entre la position de la face inférieure de la grille de verre (5) et la face inférieure de la couche d'envers (3).

Le revêtement de sol (1) obtenu présente un poids de 1918g/ m².

Selon une deuxième forme de réalisation illustrée à la figure 2, la structure multicouche (1) comprend successivement une couche d'usure transparente (2) en PVC enduit présentant une épaisseur de 0,49 mm obtenue par enduction d'un plastisol, une couche d'envers (3) présentant une épaisseur de 1,73 mm comprenant une première couche renforcée (3a) présentant une épaisseur de 0,62 mm et une seconde couche renforcée (3b) présentant une épaisseur de 1,11 mm. La première couche renforcée (3a) est obtenue par enduction d'un plastisol de PVC sur une voile de fibre de verre (4) de 54g/m² d'une épaisseur de 0,50 mm. La couche ainsi obtenue est ensuite imprimée sur la face destinée à être au regard de la couche d'usure (2) de manière à obtenir une couche décor (6).

La seconde couche renforcée (3b) est obtenue par enduction d'une couche de plastisol de PVC comprenant un agent d'expansion sur l'envers de première couche renforcée (3a). Une grille de renfort (5) est déposée sur la couche de plastisol à l'état prégélifié, c'est-à-dire après une étape de gélification partielle conservant une couche humide. La grille de renfort (5) prend alors position dans l'épaisseur de la couche (3b) mais après l'expansion partielle de la couche (3b).

Le voile de fibre de verre (4) est situé dans les premiers 40% de l'épaisseur de la couche d'envers à partir de la face supérieure de ladite couche d'envers. De façon plus précise, la médiane de l'épaisseur du voile de fibre de verre (4) est située à 17,9 % de l'épaisseur de la couche d'envers (3). La grille de verre (5) est située dans les derniers 35 % de l'épaisseur de la couche d'envers. Plus précisément, la grille de verre (5) est située à 87,9 % de l'épaisseur de la couche d'envers à partir de la face supérieure de ladite couche d'envers. Le revêtement de sol ainsi obtenu présente une main assez souple et un effet « bi-lame » fort lui permettant de se dérouler de façon très aisée et d'être posé très facilement à la manière d'un sol plombant. Cependant l'envers de la couche d'envers ne présente pas de plots ce qui limite sa capacité à être posé en pose libre.

Selon une troisième forme de réalisation illustrée à la figure 3, la structure multicouche (1) comprend successivement une couche d'usure transparente (2) présentant une épaisseur de 0,33 mm obtenue par enduction d'un plastisol de PVC, une couche d'envers (3) présentant une épaisseur de 2,95 mm comprenant une première couche renforcée (3a) présentant une épaisseur de 0,84 mm, une couche intercalaire compacte (3c) présentant une épaisseur de 0,4 mm et une seconde couche renforcée (3b) présentant une épaisseur de 1,71 mm. La première couche renforcée (3a) est obtenue par enduction d'un plastisol de PVC sur une voile de fibre de verre (4) de 70g/ m² d'une épaisseur de 0,72 mm. La couche ainsi obtenue est ensuite imprimée sur la face destinée à être au regard de la couche d'usure (2) de manière à obtenir une couche décor (6).

La couche intercalaire compacte (3c) permet de limiter les effets de curling, d'équilibrer les tensions créées par la couche d'usure et d'améliorer les propriétés mécaniques de la structure multicouche selon l'invention. La couche intercalaire compacte (3c) est obtenue par enduction d'un plastisol PVC. La seconde couche renforcée (3b) est obtenue par enduction d'une couche de plastisol comprenant un agent d'expansion sur l'envers de la couche intercalaire compacte (3c). Une grille de renfort (5) est déposée sur la couche de plastisol à l'état liquide, de la même manière que dans l'exemple illustré en rapport avec la figure 1.

Le voile de fibre de verre (4) est situé dans les premiers 30% de l'épaisseur de la couche d'envers à partir de la face supérieure de ladite couche d'envers. La médiane de l'épaisseur du voile de fibre de verre (4) est plus précisément située à 14,2 % de l'épaisseur de la couche d'envers (3) à partir de la face supérieure de ladite couche d'envers. La grille de verre (5) est située dans les derniers 35% de l'épaisseur de la couche d'envers. Plus précisément, la grille de verre (5) est située à 78,6 % de l'épaisseur de la couche d'envers à partir de la face supérieure de ladite couche d'envers. Le revêtement de sol ainsi obtenu présente une bonne main assez souple et un effet « bi-lame » fort lui permettant de se dérouler de façon très aisée et d'être posé très facilement à la manière d'un sol plombant. De plus l'envers de la couche d'envers présente des plots (9) lui permettant d'être posé en pose libre.

Le revêtement de sol (1) obtenu présente un poids de 2740g/m².

Selon une quatrième forme de réalisation également illustrée à la figure 3, la structure multicouche (1) comprend successivement une couche d'usure transparente (2) présentant une épaisseur de 0,65 mm obtenue par enduction d'un plastisol de PVC, une couche d'envers (3) présentant une épaisseur de 2,83 mm comprenant une première couche renforcée (3a) présentant une épaisseur de 0,76 mm, une couche intercalaire compacte (3c) présentant une épaisseur de 0,38 mm et une seconde couche renforcée (3b) présentant une épaisseur de 1,69mm. La première couche renforcée (3a) est obtenue par enduction d'un plastisol sur une voile de fibre de verre (4) de 60g/ m² d'une épaisseur de 0,60 mm environ. La couche ainsi obtenue est ensuite imprimée sur la face destinée à être au regard de la couche d'usure (2) de manière à obtenir une couche décor (6).

La couche intercalaire compacte (3c) est obtenue par enduction d'un plastisol PVC. La seconde couche renforcée (3b) est obtenue par enduction d'une couche de plastisol de PVC comprenant un agent d'expansion sur l'envers de la couche intercalaire compacte (3c). Une grille de renfort (5) est déposée sur la couche de plastisol à l'état liquide, de la même manière que dans l'exemple illustré en rapport avec la figure 1. La grille de renfort (5) présente une épaisseur de 0,17mm environ.

Le voile de fibre de verre (4) est situé dans les premiers 30% de l'épaisseur de la couche d'envers à partir de la face supérieure de ladite couche d'envers. Plus précisément, la médiane de l'épaisseur du voile de fibre de verre (4) est située à 13,4 % de l'épaisseur de la couche d'envers (3) à partir de la face supérieure de ladite couche d'envers. La grille de verre (5) est située dans les derniers 35% de l'épaisseur de la couche d'envers. Plus précisément, la médiane de l'épaisseur de la grille de verre (5) est située à 85,6 % de l'épaisseur de la couche d'envers à partir de la face supérieure de ladite couche d'envers. Le revêtement de sol ainsi obtenu présente une très bonne main assez souple et un effet « bi-lame » fort lui permettant de se dérouler de façon très aisée et d'être posé très facilement à la manière d'un sol plombant. De plus l'envers de la couche d'envers présente des plots (9) d'une hauteur de 0,5 mm environ lui permettant d'être posé en pose libre.

Le revêtement de sol (1) obtenu présente de très bonnes performances acoustique, notamment une atténuation acoustique selon la norme ISO 10140- 3 supérieure à 19dB.

## Revendications

1. Structure multicouche (1) pour la réalisation d'un revêtement de sol en panneau ou dalle souple comprenant une couche supérieure d'usure (2) liée à une couche d'envers (3) en polymère, ladite couche d'envers comprenant successivement une première couche renforcée (3a) avec une première armature de renfort (4) et une seconde couche renforcée (3b) avec une seconde armature de renfort (5) ***caractérisée* en ce que** la première armature de renfort (4) est située dans les premiers 40% de l'épaisseur de la couche d'envers (3) à partir de la face supérieure de ladite couche d'envers (3), et la seconde armature de renfort (5) est située dans la moitié inférieure de l'épaisseur de la couche d'envers (3).

2. Structure multicouche (1) selon la revendication *1,* ***caractérisée* en ce que** la première armature de renfort (4) est située dans les premiers 30% de l'épaisseur de la couche d'envers (3).

3. Structure multicouche (1) selon la revendication 1, ***caractérisée* en ce que** la seconde armature de renfort (5) est située dans les derniers 35 % de l'épaisseur de la couche d'envers (3).

4. Structure multicouche (1) selon la revendication 1, ***caractérisée* en ce que** la seconde couche renforcée (3b) est une couche de plastisol gélifiée.

5. Structure multicouche (1) selon la revendication 1, ***caractérisée* en ce que** la première armature de renfort (4) est une couche de textile non-tissé.

6. Structure multicouche (1) selon la revendication 5, ***caractérisée* en ce que** la couche de textile non-tissé est un voile de fibres de verre ou de polyester.

7. Structure multicouche (1) selon la revendication 1, ***caractérisée* en ce que** la seconde armature de renfort (5) est une grille de renfort.

8. Structure multicouche (1) selon la revendication 7, ***caractérisée* en ce que** la grille de renfort est une grille de fibres de verre ou de polyester.

9. Structure multicouche (1) selon la revendication 1, ***caractérisée* en ce que** la couche d'usure (2) présente une épaisseur comprise entre 0,10 et 1 mm, et la couche d'envers (3) présente une épaisseur comprise entre 0,6 et 6 mm.

10. Procédé de fabrication d'une structure multicouche (1) selon la revendication 1, ***caractérisé* en ce qu'**il comprend les étapes suivantes qui consistent à :
a) former une première couche renforcée (3a) avec une première armature de renfort (4) ;
b) enduire une couche de plastisol liquide comprenant un agent d'expansion sur une face de la première couche renforcée (3a) ;
c) disposer sur ladite couche de plastisol liquide la seconde armature de renfort (5) ;
d) gélifier ladite couche de plastisol de manière à former une seconde couche renforcée (3b) ;
e) enduire puis gélifier, ou complexer une couche d'usure (2) sur l'autre face de la première couche renforcée (3a).

11. Procédé de fabrication d'une structure multicouche (1) selon la revendication 10, ***caractérisé* en ce que** l'étape a) consiste à :
- enduire une couche de plastisol liquide sur la première armature de renfort (4) ;
- gélifier ladite couche de plastisol de manière à obtenir la première couche renforcée (3a).
